# EUROPÄISCHE PATENTSCHRIFT

(11) **EP 1 656 264 B1**
(45) Veröffentlichungstag und Bekanntmachung des Hinweises auf die Patenterteilung: **18.07.2007**
(21) Anmeldenummer: 04766358.8
(22) Anmeldetag: 29.07.2004
(51) Int. Cl.: B60C 23/04, B60C 23/06

(54) **VERFAHREN ZUR ÜBERWACHUNG VON REIFENDRUCKÜBERWACHUNGSSYSTEMEN IN EINEM KRAFTFAHRZEUG**
METHOD FOR MONITORING TYRE-PRESSURE MONITORING SYSTEMS IN A MOTOR VEHICLE
PROCEDE POUR SURVEILLER DES SYSTEMES DE SURVEILLANCE DE PRESSION DE PNEUMATIQUE DANS UN VEHICULE AUTOMOBILE

(30) Priorität: 14.08.2003 DE 10337778
(43) Veröffentlichungstag der Anmeldung: 17.05.2006
(73) Patentinhaber: Continental Teves AG & Co. oHG, 60488 Frankfurt am Main (DE)
(72) Erfinder: STÖLZL, Stefan, 69469 Weinheim (DE); GRIESSER, Martin, 65760 Eschborn (DE); KÖBE, Andreas, 64625 Bensheim (DE); LAUER, Peter, 61118 Bad Vilbel (DE); KOUKES, Vladimir, 64297 Darmstadt (DE)
(86) Internationale Anmeldenummer: PCT/EP2004/051649
(87) Internationale Veröffentlichungsnummer: WO 2005/018962

(56) Entgegenhaltungen:
- WO-A-03/006268
- DE-C- 19 917 034

## Beschreibung

Die Erfindung betrifft ein Verfahren zur Überwachung von Reifendrucküberwachungssystemen gemäß Oberbegriff von Anspruch 1, sowie ein Computerprogrammprodukt gemäß Anspruch 6.

In modernen Fahrzeugen werden zur Verbesserung der Sicherheit vermehrt Reifendrucküberwachungssysteme eingesetzt. Einerseits sind sogenannte direkte Reifendrucküberwachungssysteme bekannt, welche mittels Druckmodule in den Fahrzeugreifen den Reifenluftdruck überwachen. Weiterhin sind sogenannte indirekte Reifendrucküberwachungssysteme, beispielsweise aus WO 01/87647 A1, US 638 585 553 B1 und EP 0 832 767 B1 bekannt, die aus Drehzahlinformationen (Raddrehzahl, Winkelgeschwindigkeit, Frequenz, etc.) der Fahrzeugräder den Reifenluftdruck bestimmen. Aus der DE 100 60 392 A1 ist auch ein Reifendrucküberwachungssystem bekannt, welches eine Kombination aus einem indirekten Reifendrucküberwachungssystem mit einem reduzierten direkten Reifendrucküberwachungssystem beschreibt. Bei diesem Reifendrucküberwachungssystem werden einerseits die Raddrehzahlinformationen von Radsensoren, welche bei einem Fahrzeug mit einem Anti-Blockier-System (ABS) bereits vorhanden sind, und andererseits direkt gemessene Reifenluftdrücke, welche von 1 bis 2 Druckmodulen in den Fahrzeugreifen bereitgestellt werden, benutzt um einen Reifenluftdruckverlust zu erkennen. Das in der DE 100 60 392 A1 beschriebene Reifendrucküberwachungssystem weist somit zwei unabhängig voneinander ausgeführte Reifendrucküberwachungssysteme (direkt und indirekt) auf, wobei jedes dieser Reifendrucküberwachungssysteme unter Berücksichtigung bestimmter Bewertungskriterien unabhängig von dem anderen Reifendrucküberwachungssystem ein Warnsignal generiert. Weiterhin ist aus der DE 199 170 34 C1 ein Reifendrucküberwachungssystem gemäß dem oberbegriff des Anspruchs 1 bekannt.

Der Vorteil des direkt messenden Reifendrucküberwachungssystems (TPMS) liegt darin, dass ein Reifenluftdruckverlust an jedem einzelnen Rad und an einer Kombination beliebiger Räder erkannt wird. Nachteilig an diesem System hingegen ist, dass die benötigten Druckmodule in den Reifen im allgemeinen nicht redundant ausgeführt sind bzw. keine Überwachung der Druckmodule vorhanden ist, wodurch es unter Umständen zu ausbleibenden Warnungen bzw. zu Fehlwarnungen hinsichtlich eines Reifenluftdruckverlustes kommen kann.

Das indirekt messende Reifendrucküberwachungssystem basiert, wie weiter oben schon beschrieben, auf den Drehzahlinformationen der in einem Anti-Blockier-System (ABS) vorhandenen Raddrehzahlsensoren. Diese Raddrehzahlsensoren werden, auf an sich bekannte Weise, im Anti-Blockier-System (ABS) überwacht. Hierdurch wird ein eventueller Defekt eines oder mehrerer Raddrehzahlsensoren erkannt, wodurch Fehlwarnungen aufgrund defekter Raddrehzahlsensoren nahezu ausgeschlossen sind. Nachteilig an diesem System ist allerdings, dass ein gleichzeitiger Reifenluftdruck an allen Rädern unter Umständen nicht erkannt werden kann. Das System erkennt einen Reifenluftdruckverlust anhand unterschiedlicher Raddrehzahlen der einzelnen Räder, wobei sich ein Rad mit einem Reifenluftdruckverlust schneller dreht, als ein Rad ohne Reifenluftdruckverlust. Weisen alle Räder denselben Reifenluftdruckverlust auf, so erkennt das System aufgrund der fehlenden Drehzahldifferenz diesen gleichzeitigen Reifenluftdruckverlust nicht.

Ausgehend von der Kombination eines indirekt messenden Reifendrucküberwachungssystems mit einem direkt messenden Reifendrucküberwachungssystem (TPMS) ist es die Aufgabe der Erfindung ein Verfahren bereitzustellen, welches das indirekt messende Reifendrucküberwachungssystem und das direkt messende Reifendrucküberwachungssystem (TPMS) dahingehend überwacht, dass Warnungen des direkt messenden Reifendrucküberwachungssystems (TPMS) hinsichtlich eines Reifenluftdruckverlustes durch Betrachtung der Ausgangssignale des indirekt messenden Reifendrucküberwachungssystems überprüft werden.

Diese Aufgabe wird erfindungsgemäß durch das Verfahren nach Anspruch 1 gelöst.

In einer bevorzugten Ausführungsform weisen das direkt messende Reifendrucküberwachungssystem (TPMS) und das indirekt messende Reifendrucküberwachungssystem gleiche Erkennungsschwellen für einen Reifenluftdruckverlust auf.

In einer weiteren bevorzugten Ausführungsform weisen das direkt messende Reifendrucküberwachungssystem (TPMS) und/oder das indirekt messende Reifendrucküberwachungssystem eine Einbaupositionserkennung auf, welche es ermöglich, einen Reifen mit einem Reifenluftdruckverlust einer Einbauposition (Rad vorne links, Rad vorne rechts, Rad hinten links, Rad hinten rechts) zuzuordnen.

Weitere bevorzugte Ausführungsformen ergeben sich aus den Unteransprüchen und der nachfolgenden Beschreibung von einigen Ausführungsbeispielen.

Als Ausgangskonfiguration wird ein Kraftfahrzeug mit einem direkt messenden Reifendrucküberwachungssystem (TPMS) und einem indirekt messenden Reifendrucküberwachungssystem betrachtet. Das indirekt messende Reifendrucküberwachungssystem basiert hierbei auf Drehzahlinformationen (Raddrehzahl, Winkelgeschwindigkeit, Frequenz, etc.), welche mittels Raddrehzahlsensoren ermittelt werden. Ferner soll im folgenden nur ein vierrädriges Fahrzeug betrachtet werden, wobei das erfindungsgemäße Verfahren auch auf Fahrzeuge mit mehr oder weniger Räder übertragbar ist. Das direkt messende Reifendrucküberwachungssystem (TPMS) weist hierbei ein in oder an jedem Rad befindliches Druckmodul auf, welches auf an sich bekannte Weise in regelmäßigen Abständen einen Reifenluftdruckwert oder ein dem Reifenluftdruck proportionales Signal an eine Auswerteeinrichtung übermittelt. Die Übermittlung des Reifenluftdrucks kann hierbei z. B. über einen mit dem Druckmodul verbundenen Sender und einem mit der Auswerteeinrichtung verbundenem Empfänger erfolgen.

Das indirekt messende Reifendrucküberwachungssystem ermittelt auf ebenfalls an sich bekannte Weise aus Drehzahlinformationen der Räder Werte, welche Rückschlüsse auf einen Reifenluftdruckverlust an ein bis drei Fahrzeugrädern ermöglichen. Hierzu werden z. B. die Raddrehzahlsensoren eines im Fahrzeug vorhandenen Anti-Blockier-Systems (ABS) benutzt.

Dem erfindungsgemäßen Verfahren stehen somit im Idealfall vier direkt gemessene Reifenluftdrücke, sowie vier aus den vier Raddrehzahlsensoren ermittelte Reifenluftdrücke zur Verfügung.

Durch das erfindungsgemäße Verfahren werden die oben beschriebenen Nachteile eliminiert, indem vor einer Warnung auf einen Reifenluftdruckverlust eines der Reifendrucküberwachungssysteme durch Überprüfung der Signale des anderen Reifendrucküberwachungssystems diese Warnung hinsichtlich ihrer Richtigkeit kontrolliert wird. Da, wie oben beschrieben, die Raddrehzahlsensoren des indirekt messenden Reifendrucküberwachungssystems überwacht werden, wird dieses System als Referenzsystem zugrundegelegt, da es als nicht sehr fehleranfällig gilt. Das indirekte Reifendrucküberwachungssystem dient somit im wesentlichen zur Bestätigung der vom direkt messenden Reifendrucküberwachungssystem (TPMS) ausgegebenen Warnungen.

Ausgehend von einem Fahrzeug mit vier Druckmodulen und vier Raddrehzahlsensoren wird gemäß dem erfindungsgemäßen Verfahren so lange keine Warnung hinsichtlich eines Reifenluftdruckverlusts gegeben, wie das indirekt messende Reifendrucküberwachungssystem keinen Reifenluftdruckverlust erkennt, wobei der Fall, dass alle Räder einen gleichzeitigen Reifenluftdruckverlust aufweisen, weiter unten gesondert betrachtet wird. Hierbei ist zu beachten, dass sowohl das indirekt messende Reifendrucküberwachungssystem als auch das direkt messende Reifendrucküberwachungssystem (TPMS) dieselben Erkennungsschwellen für einen Reifenluftdruckverlust aufweisen. Wird über ein erstes Druckmodul angezeigt, dass ein Reifenluftdruckverlust vorliegt, aber weder das indirekt messende Reifendrucküberwachungssystem noch ein weiteres Druckmodul zeigt einen Reifenluftdruckverlust an, so wird das erste Druckmodul als fehlerhaft betrachtet und es wird für die weitere Überwachung nicht mehr berücksichtigt. Somit erfolgt die zukünftige Überwachung auf einen Reifenluftdruckverlust durch die vier Raddrehzahlsensoren und die übrigen 3 Druckmodule. Zeigt wiederum ein zweites Druckmodul einen Reifenluftdruckverlust an, wobei weder das indirekt messende Reifendrucküberwachungssystem noch die anderen Druckmodule einen Reifenluftdruckverlust bestätigen, wird auch dieses zweite Druckmodul als fehlerhaft betrachtet und für die.weitere Überwachung nicht mehr berücksichtigt. Somit erhält man ein abgestuftes Überwachungskonzept, was Warnungen fehlerhafter Druckmodule erkennt. Solange noch mindestens zwei Druckmodule einwandfrei arbeiten, kann auch ein Reifenluftdruckverlust an allen Rädern sicher dadurch erkannt werden, dass das indirekt messende Reifendrucküberwachungssystem keinen Reifenluftdruckverlust anzeigt, wohingegen die mindestens zwei Druckmodule eine Warnung hinsichtlich eines Reifenluftdruckverlusts geben. Da es unwahrscheinlich ist, dass zwei Druckmodule gleichzeitig ausfallen, erkennt das erfindungsgemäße Verfahren die beschriebene Situation als einen Reifenluftdruckverlust an allen Rädern.

Erst wenn nur noch ein Druckmodul im System vorhanden ist bzw. bisher als fehlerfrei galt, kann bei einer Warnung hinsichtlich eines Reifenluftdruckverlustes von diesem Druckmodul und keiner Warnung vom indirekt messenden Reifendrucküberwachungssystem nicht mehr mit Sicherheit gesagt werden, ob das Druckmodul fehlerbehaftet ist, oder ob ein Reifenluftdruckverlust an allen Rädern vorliegt. Deshalb wird in dieser Situation sicherheitshalber eine Warnung an den Fahrzeugführer weitergegeben.

Das erfindungsgemäße Verfahren arbeitet auch in den Fällen zuverlässig, wenn z. B. ein Ersatzrad ohne Druckmodul montiert ist oder wenn Räder mit abgefahrenen Reifen durch neue Räder bzw. Reifen ohne Druckmodule ersetzt werden.

Wenn z. B. ein Ersatzrad ohne Druckmodule montiert wird, und die Überwachung bisher auf vier Raddrehzahlsensoren und vier Druckmodulen basierte, wird die weitere Überwachung nur noch mit den verbleibenden drei Druckmodulen (ein Rad mit einem Druckmodul wurde gegen ein Ersatzrad ohne Druckmodul getauscht) durchgeführt. Werden z. B. zwei Räder bzw. Reifen einer Achse ausgetauscht, und weisen diese Räder bzw. Reifen keine Druckmodule auf, so arbeitet das erfindungsgemäße Verfahren auf Basis der verbleibenden Druckmodule wie oben beschrieben.

Wenn ein oder mehrere fehlerhafte Druckmodule erkannt worden sind, kann dies dem Fahrzeugführer z. B. über eine Warnlampe oder ähnliche Einrichtungen direkt angezeigt werden. Da das erfindungsgemäße Verfahren, wie oben beschrieben, auch bei Ausfall eines oder mehrerer Druckmodule weiterhin zuverlässig einen Reifenluftdruckverlust erkennt, kann eine Anzeige des oder der fehlerhaften Druckmodule auch erst im Rahmen einer Fahrzeuginspektion erfolgen, um den Fahrzeugführer durch das Aufleuchten einer Warnlampe nicht zu verunsichern.

Fällt hingegen das indirekt messende Reifendrucküberwachungssystem aus, was den Ausfall eines Raddrehzahlsensors und damit den Ausfall des Anti-Blockier-Systems (ABS) bedeutet, so wird dieser Ausfall dem Fahrzeugführer angezeigt.

Wird für das erfindungsgemäße Verfahren ein direkt messendes Reifendrucküberwachungssystem (TPMS) verwendet, welches über eine Einbaupositionserkennung der Fahrzeugräder verfügt, so kann das erfindungsgemäße Verfahren hinsichtlich der Überwachung der Druckmodule weiter verfeinert werden.

Unter der Einbaupositionserkennung wird verstanden, dass dem direkt messenden Reifendrucküberwachungssystem (TPMS) bekannt ist, an welcher Einbauposition (Rad vorne links, Rad vorne rechts, Rad hinten links, Rad hinten rechts) sich ein Fahrzeugrad mit einem Druckmodul befindet. Eine bekannte Möglichkeit zur Einbaupositionserkennung ist die Verwendung mehrerer Empfänger bzw. Empfangsantennen. Hierdurch ist z. B. über eine Feldstärkenerkennung eine Zuordnung der Druckmodule bzw. der Räder mit den enthaltenden Druckmodulen zu den Einbaupositionen gegeben. Auch andere, bereits bekannte Verfahren oder Vorrichtungen zur Einbaupositionserkennung können für die weitere Verfeinerung des erfindungsgemäßen Verfahrens verwendet werden.

Das indirekt messende Reifendrucküberwachungssystem verfügt ebenfalls über eine Einbaupositionserkennung, sofern die Einbaupositionen der Raddrehzahlsensoren dem System bekannt sind. Durch die Einbaupositionserkennung ist es möglich, dem Fahrzeugführer unmittelbar anzuzeigen, welches Druckmodul (z. B. Druckmodul im Rad vorne links) ausgefallen ist. Diese Anzeige kann alternativ auch, wie bereits oben beschrieben, erst im Rahmen einer Fahrzeuginspektion erfolgen.

Weiterhin kann auch eine andersartige Überwachung der verwendeten Druckmodule, z. B. durch eine eigene Fehlerüberwachung des direkt messenden Reifendrucküberwachungssystems (TPMS) oder durch eine andere im Fahrzeug befindliche Einrichtung erfolgen. Wird hierbei der Ausfall eines oder mehrerer Druckmodule festgestellt, so erfolgt die weitere Überwachung hinsichtlich eines Reifenluftdruckverlustes nach dem erfindungsgemäßen Verfahren auf Basis der noch verbleibenden Druckmodule wie bereits weiter oben beschrieben.

## Patentansprüche

1. Verfahren zur Überwachung von Reifendrucküberwachungssystemen in einem Kraftfahrzeug, wobei das Kraftfahrzeug ein indirekt messendes Reifendrucküberwachungssystem, welches auf Basis von Raddrehzahlinformationen einen Reifenluftdruckverlust erkennt, und ein direkt messendes Reifendrucküberwachungssystem (TPMS), welches aus direkt, mittels Druckmodulen, am Fahrzeugreifen gemessenen Reifenluftdruckwerten einen Reifenluftdruckverlust erkennt, aufweist, **dadurch gekennzeichnet, dass** eine durch ein Druckmodul des direkt messenden Reifendrucküberwachungssystems (TPMS) ausgegebene Warnung bezüglich eines Reifenluftdruckverlusts erst an den Fahrzeugführer übermittelt wird, wenn dieser Reifenluftdruckverlust durch das indirekt messende Reifendrucküberwachungssystem bestätigt wird.

2. Verfahren nach Anspruch 1, **dadurch gekennzeichnet, dass** ein Druckmodul, welches eine unbestätigte Warnung bezüglich eines Reifenluftdruckverlustes generiert hat, als fehlerhaft angesehen wird, und bei der weiteren Überwachung die von diesem Druckmodul gelieferten Reifenluftdruckwerte nicht berücksichtigt werden.

3. Verfahren nach Anspruch 1 oder 2, **dadurch gekennzeichnet, dass** bei Ausfall des indirekt messenden Reifendrucküberwachungssystems eine Warnung an den Fahrzeugführer gegeben wird.

4. Verfahren nach Anspruch 1 oder 2, **dadurch gekennzeichnet, dass** der Ausfall eins oder mehrerer Druckmodule dem Fahrzeugführer angezeigt wird.

5. Verfahren nach Anspruch 1 oder 2, **dadurch gekennzeichnet, dass** der Ausfall eines oder mehrerer Druckmodule erst im Rahmen einer Fahrzeuginspektion angezeigt wird.

6. Computerprogrammprodukt zur Durchführung aller Schritte eines Verfahrens gemäß mindestens einem der Ansprüche 1 bis 5.

## Claims

1. Method of monitoring tire pressure monitoring systems in a motor vehicle, with the motor vehicle comprising a tire pressure monitoring system with indirect measurement which detects tire inflation pressure loss on the basis of wheel rotational speed data, and a tire pressure monitoring system with direct measurement (TPMS) which detects tire inflation pressure loss from tire inflation pressure values measured directly, by means of pressure modules, on the vehicle tire,
**characterized in that** a warning relating to tire inflation pressure loss emitted by a pressure module of the tire pressure monitoring system with direct measurement (TPMS) is not transmitted to the driver until this tire inflation pressure loss is confirmed by the tire pressure monitoring system with indirect measurement.

2. Method as claimed in claim 1,
**characterized in that** a pressure module which generated an unconfirmed warning relating to tire inflation pressure loss is considered as faulty, and the tire inflation pressure values supplied from this pressure module are not taken into account in the continued monitoring operation.

3. Method as claimed in claim 1 or 2,
**characterized in that** a warning is given to the driver upon failure of the tire pressure monitoring system with indirect measurement.

4. Method as claimed in claim 1 or 2,
**characterized in that** failure of one or more pressure modules is indicated to the driver.

5. Method as claimed in claim 1 or 2,
**characterized in that** failure of one or more pressure modules is indicated only during vehicle inspection.

6. Computer program product for implementing all steps of a method according to at least any one of claims 1 to 5.

## Revendications

1. Procédé pour surveiller des systèmes de surveillance de pression de pneu d'un véhicule automobile, dans lequel le véhicule automobile comporte un système de surveillance de pression de pneu à mesure indirecte, qui reconnaît une perte de pression de pneu sur la base d'informations relatives à la vitesse de rotation de roue, ainsi qu'un système de surveillance de pression de pneu à mesure directe (TPMS), qui reconnaît une perte de pression de pneu à partir de valeurs de pression de pneu mesurées directement sur le pneu du véhicule, au moyen de modules de pression, **caractérisé en ce qu'**un avertissement, délivré par un module de pression du système de surveillance de pression de pneu à mesure directe (TPMS), relatif à une perte de pression de pneu, n'est transmis au conducteur du véhicule que si cette perte de pression de pneu est confirmée par le système de surveillance de pression de pneu à mesure indirecte.

2. Procédé selon la revendication 1, **caractérisé en ce qu'**un module de pression, qui a généré un avertissement non confirmé relatif à une perte de pression de pneu, est considéré comme défectueux, et les valeurs de pression de pneu fournies par ce module de pression ne sont pas prises en compte lors de la surveillance ultérieure.

3. Procédé selon la revendication 1 ou 2, **caractérisé en ce qu'**en cas de défaillance du système de surveillance de pression de pneu à mesure indirecte, un avertissement est donné au conducteur du véhicule.

4. Procédé selon la revendication 1 ou 2, **caractérisé en ce que** la défaillance d'un ou de plusieurs modules de pression est indiquée au conducteur du véhicule.

5. Procédé selon la revendication 1 ou 2, **caractérisé en ce que** la défaillance d'un ou de plusieurs modules de pression n'est indiquée que dans le cadre d'un contrôle du véhicule.

6. Produit de programme d'ordinateur pour l'exécution de toutes les étapes d'un procédé selon l'une au moins des revendications 1 à 5.
